# EUROPEAN PATENT SPECIFICATION

(11) **EP 1 762 140 B1**
(45) Date of publication and mention of the grant of the patent: **16.01.2008**
(21) Application number: 05736674.2
(22) Date of filing: 26.04.2005
(51) Int. Cl.: A01K 1/01

(54) **CANINE SANITARY DEVICE COMPRISING A PEAR-SHAPED BOWL**
HYGIENEVORRICHTUNG FÜR HUNDE MIT EINER BIRNENFÖRMIGEN SCHÜSSEL
DISPOSITIF SANITAIRE CANIN CONSTITUE D'UNE TASSE EN FORME DE POIRE

(30) Priority: 27.04.2004 CO 4038497
(43) Date of publication of application: 14.03.2007
(73) Proprietor: Martinez Lema, Carlos Alberto, Bogotà (CO)
(72) Inventor: Martinez Lema, Carlos Alberto, Bogotà (CO)
(74) Representative: Carvajal y Urquijo, Isabel
(86) International application number: PCT/IB2005/001368
(87) International publication number: WO 2005/101962

(56) References cited:
- ES-T3- 2 193 551
- US-A- 3 811 410
- US-A- 3 817 213
- US-A- 3 921 582
- US-A- 4 117 555
- US-A- 4 181 096
- US-A1- 2004 089 243

## Description

The present invention relates to a sanitary appliance for pets, in particular dogs, which consists in an apparatus connected to the hydraulic and sanitary system at the location, in inside or outside areas, having the advantage of being structured so that eliminating the excretion can be actuated by the animal itself.

It is a fact that many people like to share its own space with pets, in particular with dogs and it is obvious that one of the main problems found when living with these animals is the excrements generated by them. Usually, the owners have estimated as a solution to the problem to go out for a walk with their pet. Nevertheless, the actual trend of caring for the cleanness of the public locations requires the owners of these animals to pick up the excrements, which is rather uncomfortable.

Therefore, it is desirable to have an apparatus or appliance that allows the animal to evacuate its own excrements without being a burden to its owner. Up to now, different approaches have been tried to provide a sanitary for pets that is capable of being installed inside or outside the house, using the conventional tubing and that does not require an action from the part of the owner.

### STATE OF THE ART

Among the documents related to this type of appliances, we found that various types of appliances which operation is manually or electronically controlled have been developed.

The closest state of the art is constituted by the document US 3 817 213, disclosing a sanitary with a ramp arranged on the bathroom floor and allowing the access to a horizontal platform having a disc shaped recess with a centrally located hole that coincide with the top part of a bowl connected to the drain hole. This structure comprises a cistern system manually operated to generate a flow of water thereby eliminating the excrements through the drainage. In addition to the above explained central mechanism, this application includes the possibility of having a second hole at the ramp base, which connects to a second drainage, a shower for eliminating the remaining excrements on the horizontal surface and a circular curtain system hiding the sanitary.

Although, such system is an important provision to the state of the art, it has some drawbacks as the owner of the pet must be aware of draining the cistern and due to the physical characteristics cannot be used by animals of different sizes, and it should be manufactured in different sizes to fit each animal or it would increase the risk of eliminating the excrements outside of the central hole and would cause inconvenience to the pet and the owner. Furthermore, the second hole or drainage at the ramp base was made upon the recognition of the inventor that frequently the excrements will not be appropriately evacuated.

Similar to the above-mentioned apparatus, the system claimed in the US patent 3 921 582 relates to a manually operated sanitary consisting of a platform to which the animal climbs and a bowl located at a lower level of said platform, wherein the animal must excrete, which has a whole for draining to a second bowl, and one of its walls has a greater dimension than the opposing wall. Said second bowl must be removed in order to eliminate the excrements or may be provided with a water flow and drainage system in order to eliminate the excrements.

Again, the main difficulty shown in these type of sanitaries is the inconvenience of performing a manual operation to remove the excrements by the owner of the pet.

As a solution to the above-said situation, other known apparatus in the state of the art have tried to eliminate the manual operation of the cistern and to that effect various alternatives have been presented, all of them addressed to developing a sanitary with automatic actuation of the cistern.

One of said apparatus is disclosed in the US patent 3 81 410 which provides a water flow system drove through an electromechanic controlled valve. To that effect photoelectric sensors are provided at the entrance of the platform for the detection of the presence of an animal in the sanitary and when such presence is detected a signal is generated that activates the water flow, as complement to these actions, a timer circuit is included between the sensors and control valve so that the flush is delayed for a predetermined and adjustable amount of time, avoiding the flow of water running all the time while the animal is in the sanitary.

As can be observed, the advantage of the sanitary appliance shown in US Patent 3 811 410 is that of providing the owner the comfort of not being alert to flush the cistern after the animal has used the sanitary. But, this apparatus is high cost not only because of the required photoelectric and mechanic devices, but also because it needs a high pressure assortment of cocks and bibs system, a hydropneumatic equipment, and a special infrastructure allowing the control valve to permit the water to flow through. In addition, it is well known to those skilled in the art that these type of systems have a greater water volume consumption which results in an increased water system service cost. In the same way, the device does not take into account the size of the pet or the fact that the continuous movements of the animal itself can lead to the activation of the sensors and thus to a waste of water.

Now, a second proposal oriented to obtaining an automatic sanitary was claimed in the US Patent 4 117 555, that discloses the existence of a sanitary conformed of platform having a hole that coincides with a bowl located just below said platform, a cistern system connected to said bowl and provided with a valve actuated by a spring biased by the force exerted by the weight of the animal when it steps on a tilted pedestal located on the platform at the site where the animal will stand when dislodging its excrements. Said valve lifts the closure of the cistern allowing the water to flow through the tubing connecting with the bowl and therefore eliminating the excrements in it through a drainage.

The above-cited proposal improves the cost with respect to the photoelectric sensors based sanitary and offers to the owner of the animal the comfort of not being worried to actuate the cistern. Nevertheless, due to the fact that the valve remains actuated while the animal is standing on the pedestal, the waste of water continues and in addition, the water flowing continuously while the animal evacuates the excrements, it is probable that the noise made by the water flow scares the animal inhibiting the animal to get used to the sanitary or convert it into a distraction to the animal.

The above exposure make it clear that the existing sanitaries in the state of the art do not have an great acceptance due to their inadequate designs and its lack of necessary conditions to the animal, which in some of them there is the risk that the animal ends with its rear paws within the bowl itself; as well as due to other factors affecting the owner such as the inconvenience of requiring of a manual action or if it is an automatic operation the need to incur in high costs of acquisition of the apparatus as well as the installation and maintenance.

Such being the current situation, the present invention intends to provide a sanitary which performance does not require an action from the part of the owner or the person in charge of the animal, and that it be functional and adapted to the different animal sizes, easy to manufacture and install, low cost and that it does not imply an additional cost due to increase in the consumption of water or other services.

### DESCRIPTION OF THE DRAWINGS

- Figure 1.: A top view of the canine sanitary appliance. In said view cross-sections are indicated as A-A and B-B and are shown in figures 2 and 3.
- Figure 2A.: A side view of the canine sanitary appliance corresponding to the cross-section referred to as A-A in figure 1.
- Figure 2B.: A side view of the canine sanitary appliance corresponding to the cross-section referred to as A-A in figure 1, in the embodiment where the appliance is installed flush with the floor.
- Figure 3A.: A front view of the canine sanitary appliance corresponding to the cross-section referred to as B-B in figure 1.
- Figure 3B.: A front view of the canine sanitary appliance corresponding to the cross-section referred to as B-B in figure 1, in the embodiment where the appliance is installed flush with the floor.
- Figure 4.: A diagram of the process for using the canine sanitary.
- Figure 5.: Diagram of the process for actuating the lever that frees the water of the cistern of the canine sanitary.

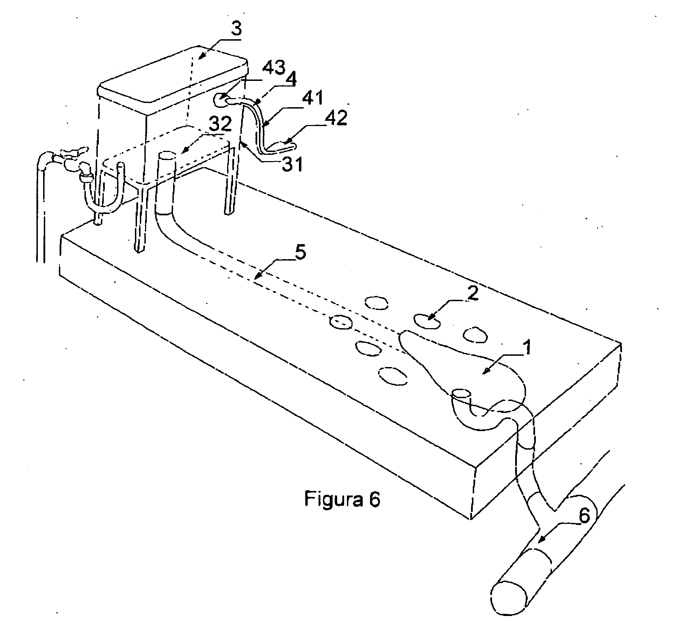

- Figure 6.: A perspective view of the canine sanitary appliance.

### ABSTRACT OF THE INVENTION

The present invention relates to a sanitary appliance connected to the hydraulic and sanitary water system at the location, in inside or outside areas, characterized in that it comprises a pear-shaped bowl or a circular bowl having a lid comprising a pear-shaped hole, the prints corresponding to the hind paws of the animal located at each side of the narrow area of the pear-shaped bowl or hole, a cistern which is positioned opposite the narrow area and the position of the prints, and a lever or device consisting of one piece comprising two parts, a first straight or curved part which connects with the cistern and has a dimension and inclination such that it extends beyond the lateral edge of the cistern and then followed by a second horizontal part which enables the animal to press its paw on, and actuate the lever in order to release water stored in the cistern.

### DETAILED DESCRIPTION

As was already mentioned, the existence of canine sanitaries involves actuator mechanisms for flushing the water in a cistern through electronic devices, devices operated by the weight of the animal or manually operated devices which require the direct action of the owner or the person in charge of the animal.

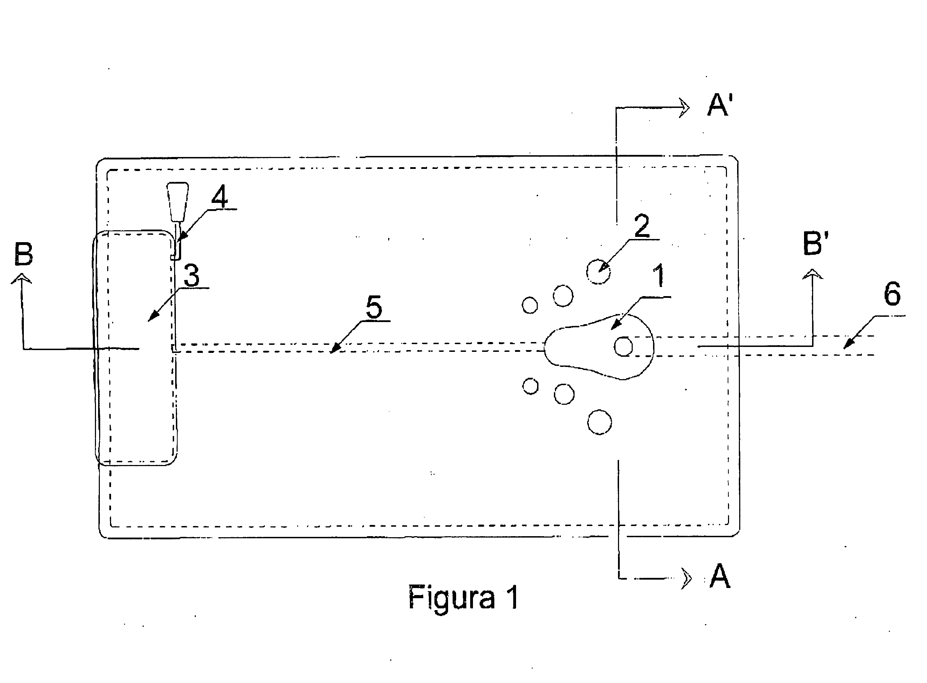

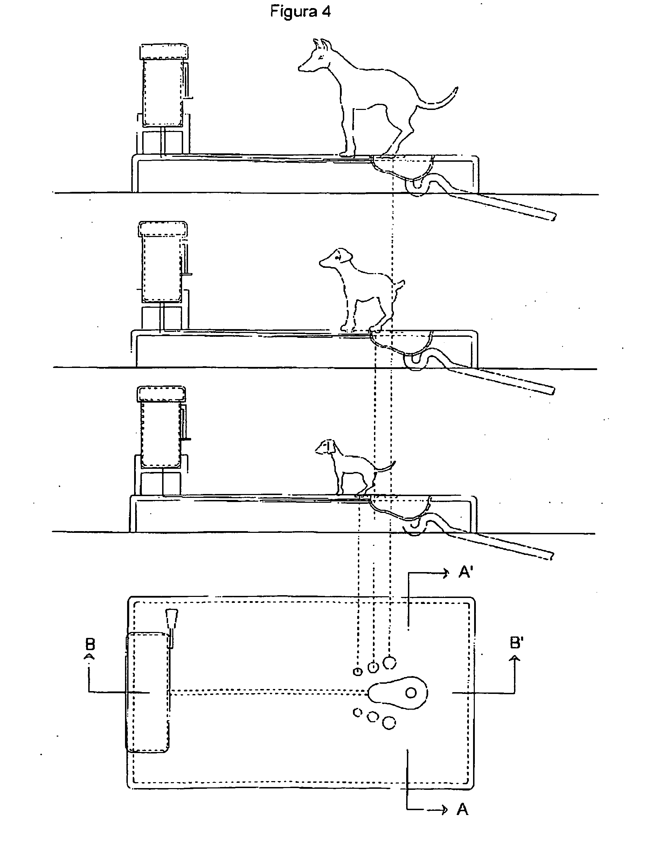

As can be seen in the top view of the installed canine sanitary appliance, shown in figures 1 and 4, said appliance is characterized in that it comprises a pear-shaped bowl (1), a pair of prints corresponding to the hind paws of the animal allowing the accommodation of all size dogs (2) located at each side of the narrow area of the pear-shaped bowl or hole (1), a cistern (3) which is positioned opposite the narrow area and the position of the prints, and a lever or device (4) consisting of one piece comprising two parts, a first part (41) which connects to the cistern and has a dimension and inclination such that it extends beyond the lateral edge of the cistern, and then followed by a second horizontal part (42) which enables the animal to press its paw on, and actuate the lever in order to release the water stored in the cistern.

The invention disclosed in the present application is based in an absolutely new concept as is the incorporation of a sanitary where the bowl has a shape similar to a pear (1), which had never been considered within the state of the art which discloses square, circular or oval-shaped sanitaries. Optionally, the invention is also directed to a sanitary appliance which has a bowl having any shape and possess a lid having a central pear-shaped hole.

The relevant concept for the invention is that the surface whereon the animal locates for the evacuation of its excrements has a central pear-shaped hole or aperture because said shape guarantee the use of the appliance by different size animals, as it allows that the animal places its paws in various locations on the platform, without taking the risk of excrement runoffs outside from said space or that the animal ends with its paws in the hole.

The above, added to the signaling of the prints so that the animal put its hind paws appropriately at each side of the narrow area of the pear-shaped bowl or hole minimizes the risk of having the excrements deposited outside of the predetermined location for that purpose.

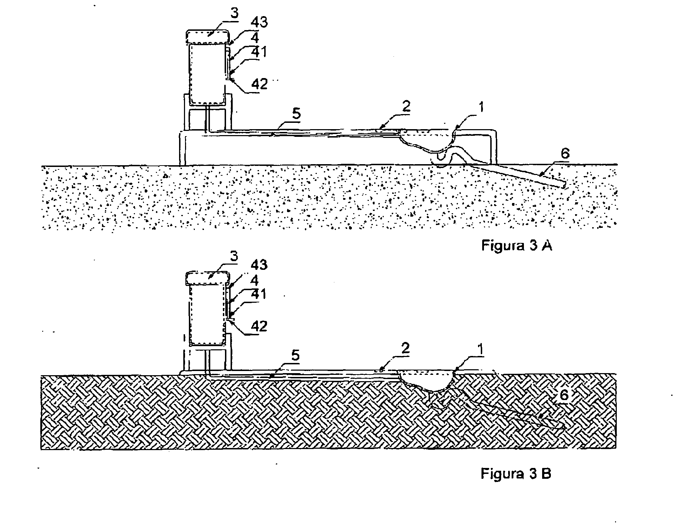

A third element that characterizes the appliance is the driving lever or device (4) shown in figure 3 and designed for being actuated by the animal itself, which is constituted by a single part comprising two parts, a first part (41) which connects to the cistern and a second part (42) which is a horizontal extension of said first part. Said first part (41) extends in a diagonally manner towards the close side edge (31) and the bottom edge (32) of the cistern (3), and has a dimension greater than the distance existent between the connection point (43) to the cistern and the close side edge (31) of the same, which allows it to project beyond the close side end (31) of the cistern separating the second part of the lever (42) and the cistern (3). Following the end of the first part (41) of the lever not attached to the cistern is the second part (42), characterized by being horizontal, which allows the animal to lay its paw and actuate the lever to free the stored water in the cistern.

Even though the lever or device constitutes a more simple way to overcome the water flushing problem and for obtaining the elimination of the excrements of pets, said device is, without any doubt, different from the proposals and teachings of the state of the art, because it is the very same animal which actuate the sanitary.

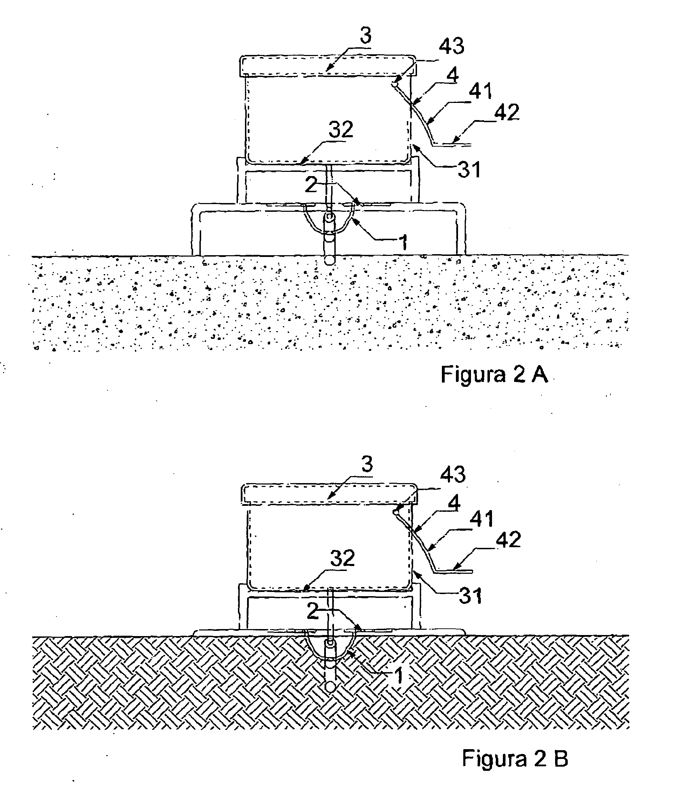

Now, the characterizing features of the invention have been defined. Nevertheless it is evident any skilled in the relevant art that the present invention contains elements that are common to any sanitary intended for human use as those shown in figure 2 and that comprise among others the tubing, control mechanisms for the water input into the cistern, a tubing (5) connecting the tank of the cistern with the bowl and a drainage tubing (6) connected to the bottom of the bowl, through which the excrements are eliminated.

As may be seen, the sanitary appliance of the present application involves the necessary structural characteristics required to accommodate different size animals and is designed to be actuated by the animal itself, which after a short training period of time gets used to using the appliance without monitoring and intervening from the part of the owner in the process of the elimination of the excrements, nor it is needed to install costly mechanisms for its automatic actuation.

On the other hand, it is clear that another advantage of the invention lays in that it can be installed flush with the floor which improved the aesthetic of the sanitary and makes it easier for the dog to accept it.

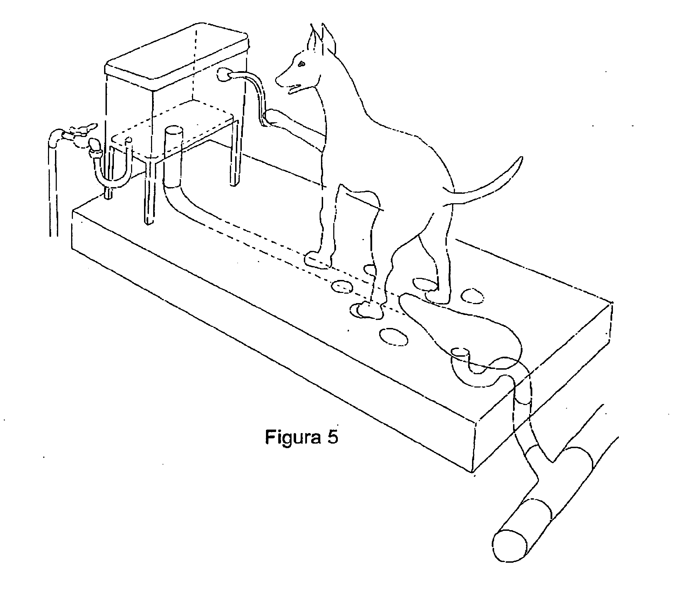

Finally, figure 4 shows the manner in which said appliance would be used by the animal which locates in a predetermined location in which its hind paws are as close as possible to the edge of the bowl in the region where the pear shape widen, while figure 5 shows the way in which the animal would actuate the lever to allow the water in the cistern to flow towards the bowl and thus the excrements are eliminated through the drainage.

As can be seen, the appliance embosses three key elements for obtaining the end of animal evacuating its excrements and driving the lever that guarantee its elimination through the drainage, the pear shape that is required for allowing different sized animals, including a little animal can use the appliance, the prints drawn at each side of the narrow region of the pear that serve as reference to the animal for its correct positioning and minimizes the risk of unwanted runoffs, and the location of the cistern in animal gets used to lowering the lever once the excretion process ends.

## Claims

1. A canine sanitary appliance **characterized by** comprising
a) a pear-shaped bowl or a bowl having a lid comprising a pear-shaped hole,
b) prints corresponding to the hind paws of the animal located at each side of the narrow area of the pear-shaped bowl or hole,
c) a cistern which is positioned opposite the narrow area and the position of the prints, and
d) a lever or device of the cistern constituted by one piece comprising two parts, a first part which connects with the cistern and has a dimension and inclination such that it extends beyond the lateral edge of the cistern and followed by a second horizontal part.

2. A canine sanitary appliance according to claim 1, **characterized in that** it comprises a tubing connecting the cistern to the bowl and a drainage connected to the bottom of the bowl.

3. A canine sanitary appliance according to claims 1 or 2, **characterized in that** the first part of the lever of the cistern is straight.

4. A canine sanitary appliance according to claims 1 or 2, **characterized in that** the first part of the lever of the cistern is curved.

5. A canine sanitary appliance according to any one of the preceding claims, **characterized in that** it comprises at least three pair of hind paw prints of the animal located at each side of the narrow area of the pear-shaped bowl or hole.

## Patentansprüche

1. Hundetoilette, **dadurch gekennzeichnet, dass** sie Folgendes umfasst:
a) eine perlenförmige Schüssel oder eine Schüssel mit einem Deckel, der ein perlenförmiges Loch umfasst,
b) Vertiefungen, die den Hinterpfoten des Tieres entsprechen und auf jeder Seite des schmalen Bereichs der perlenförmigen Schüssel oder des perlenförmigen Lochs angeordnet sind,
c) eine Zisterne, die gegenüber dem schmalen Bereich und der Position der Vertiefungen angeordnet ist, und
d) einen Hebel oder eine Vorrichtung der Zisterne, die aus einem Stück besteht, das zwei Teile umfasst: einen ersten Teil, der mit der Zisterne verbunden ist und eine solche Abmessung und Neigung aufweist, dass er sich über den seitlichen Rand der Zisterne hinaus erstreckt, und gefolgt von einem zweiten, horizontalen Teil.

2. Hundetoilette nach Anspruch 1, **dadurch gekennzeichnet, dass** sie eine Rohrleitung umfasst, welche die Zisterne mit der Schüssel verbindet, und einen Ablauf umfasst, der mit dem Boden der Schüssel verbunden ist.

3. Hundetoilette nach Anspruch 1 oder 2, **dadurch gekennzeichnet, dass** der erste Teil des Hebels der Zisterne gerade ist.

4. Hundetoilette nach Anspruch 1 oder 2, **dadurch gekennzeichnet, dass** der erste Teil des Hebels der Zisterne gekrümmt ist.

5. Hundetoilette nach einem der vorangehenden Ansprüche, **dadurch gekennzeichnet, dass** sie mindestens drei Paar Hinterpfotenvertiefungen des Tieres umfasst, die auf jeder Seite des schmalen Bereichs der perlenförmigen Schüssel oder des perlenförmigen Lochs angeordnet sind.

## Revendications

1. Instrument sanitaire canin **caractérisé en ce qu'**il comprend
a) une cuvette en forme de poire ou une cuvette comportant un couvercle comprenant un trou en forme de poire,
b) des empreintes correspondant aux pattes postérieures de l'animal situées de chaque côté de la zone étroite de la cuvette ou du trou en forme de poire,
c) un réservoir qui est positionné à l'opposé de la zone étroite et de la position des empreintes, et
d) un levier ou un dispositif du réservoir constitué par une pièce comprenant deux parties, une première partie qui se raccorde au réservoir et a une dimension et une inclinaison telles qu'elle s'étend au-delà du bord latéral du réservoir et suivi par une seconde partie horizontale.

2. Instrument sanitaire canin selon la revendication 1, **caractérisé en ce qu'**il comprend un tubage raccordant le réservoir à la cuvette et une purge raccordée au fond de la cuvette.

3. Instrument sanitaire canin selon les revendications 1 ou 2, **caractérisé en ce que** la première partie du levier du réservoir est droite.

4. Instrument sanitaire canin selon les revendications 1 ou 2, **caractérisé en ce que** la première partie du levier du réservoir est incurvée.

5. Instrument sanitaire canin selon l'une quelconque des revendications précédentes, **caractérisé en ce qu'**il comprend au moins trois paires d'empreintes de pattes postérieures de l'animal situées de chaque côté de la zone étroite de la cuvette ou du trou en forme de poire.
